# EUROPÄISCHE PATENTSCHRIFT

(11) **EP 3 637 948 B1**
(45) Veröffentlichungstag und Bekanntmachung des Hinweises auf die Patenterteilung: **12.10.2022**
(21) Anmeldenummer: 19194573.2
(22) Anmeldetag: 30.08.2019
(51) Int. Cl.: H05B 1/02, G01K 7/34, G01K 7/16

(54) **HEIZVORRICHTUNG UND VERFAHREN ZUR TEMPERATURERFASSUNG AN EINER HEIZVORRICHTUNG**
HEATING DEVICE AND METHOD FOR DETECTING TEMPERATURE ON A HEATING DEVICE
DISPOSITIF DE CHAUFFAGE ET PROCÉDÉ D'ENREGISTREMENT DE TEMPÉRATURE SUR UN DISPOSITIF DE CHAUFFAGE

(30) Priorität: 09.10.2018 DE 102018217239
(43) Veröffentlichungstag der Anmeldung: 15.04.2020
(73) Patentinhaber: E.G.O. Elektro-Gerätebau GmbH, 75038 Oberderdingen (DE)
(72) Erfinder: Block, Volker, 75015 Bretten (DE); Kümmerle, Hannes, 75038 Oberderdingen (DE); Robin, Bernd, 76356 Weingarten (DE); Schmidt, Kay, 75038 Oberderdingen-Flehingen (DE); Schönemann, Konrad, 75056 Sulzfeld (DE); Tafferner, Michael, 76316 Malsch (DE)
(74) Vertreter: Patentanwälte Ruff, Wilhelm, Beier, Dauster & Partner mbB

(56) Entgegenhaltungen:
- EP-A1- 3 145 273
- DE-A1-102014 201 640
- DE-A1-102016 213 097
- US-A- 3 062 999

## Beschreibung

### Anwendungsgebiet und Stand der Technik

Die Erfindung betrifft eine Heizvorrichtung mit einem Träger zur Beheizung eines an den Träger angrenzenden Mediums, insbesondere von Wasser. Des Weiteren betrifft die Erfindung ein Verfahren zur Temperaturerfassung an einer solchen Heizvorrichtung.

Derartige Heizvorrichtungen sind bekannt aus der EP 3145273 A1 und aus der DE 10 2013 200 277 A1, wobei ein Temperatursensor in sie integriert ist. Dieser soll insbesondere eine flächige Temperaturüberwachung ermöglichen. Hierfür ist eine Sensorschicht aus dielektrischem Material bekannt und vorgesehen, die eine temperaturabhängige elektrische Leitfähigkeit aufweist. Bei Raumtemperatur ist sie elektrisch isolierend, bei zunehmender Temperatur fließt ein sogenannter Leckstrom, also ein ansteigender Strom, durch sie hindurch. Dessen Größe kann zur Bestimmung einer Temperatur an der Sensorschicht und somit auch an dem Träger verwendet werden. Hierfür gibt es verschiedene Möglichkeiten, wobei üblicherweise auch gewünscht ist, dass die dielektrische Sensorschicht als Isolierung dient. Dies ist insbesondere dann wichtig, wenn der Träger aus Metall ist und mit ihm Wasser beheizt werden soll, das an ihn angrenzt.

Aus der DE 10 2016 213 097 A1 ist eine Sensoranordnung mit einem kabellosen Temperatursensor bekannt, die dazu dient, an einem Wälzlager eine Temperatur zu erfassen. Dabei ist einerseits ein angeregter Schwingkreis vorgesehen mit einem Empfänger, einem Funktionsstromerzeuger und einer Primärspule, die mit einem Richtungskoppler verbunden ist. Andererseits ist ein passiver Schwingkreis mit einer temperaturabhängigen Kondensatorkapazität und einer Induktionsspule vorgesehen, wobei diese Induktionsspule mit der Primärspule des angeregten Schwingkreises interagiert. Zu dem genannten Richtungskoppler hin ist ein Transformator vorgesehen.

### Aufgabe und Lösung

Der Erfindung liegt die Aufgabe zugrunde, eine eingangs genannte Heizvorrichtung sowie ein eingangs genanntes Verfahren zu schaffen, mit denen Probleme des Standes der Technik gelöst werden können und es insbesondere möglich ist, eine Heizvorrichtung einfach und mit überschaubarem Aufwand herzustellen sowie praxistauglich und betriebssicher betreiben zu können, insbesondere auch im Fall von zu hohen auftretenden Temperaturen.

Gelöst wird diese Aufgabe durch eine Heizvorrichtung mit den Merkmalen des Anspruchs 1 sowie durch ein Verfahren mit den Merkmalen des Anspruchs 10. Vorteilhafte sowie bevorzugte Ausgestaltungen der Erfindung sind Gegenstand der weiteren Ansprüche und werden im Folgenden näher erläutert. Dabei werden manche der Merkmale nur für die Heizvorrichtung oder nur für das Verfahren beschrieben.

Es ist vorgesehen, dass die Heizvorrichtung einen Träger aufweist, der an einer Oberseite elektrisch isolierend ist, und der an seiner Unterseite ein angrenzendes Medium beheizt. Dies kann vorteilhaft eine Flüssigkeit bzw. Wasser sein. Die Oberseite kann aufgrund des Trägermaterials selbst elektrisch isolierend sein, alternativ kann sie im Falle eines Trägers aus Metall odgl. mit einer isolierenden Schicht versehen sein. Auf dem Träger sind ein Heizleiter und eine Sensorschicht aus dielektrischem Material aufgebracht, wobei deren Reihenfolge grundsätzlich variiert werden kann, so dass die Sensorschicht über oder unter dem Heizleiter angeordnet und elektrisch gegen ihn isoliert ist, insbesondere aufgrund ihrer eigenen Eigenschaften. Des Weiteren weist die Sensorschicht eine temperaturabhängige elektrische Leitfähigkeit auf, so dass sich ihr elektrischer Widerstand, der insbesondere ein komplexer elektrischer Widerstand ist, in Abhängigkeit von der Temperatur an der Sensorschicht und somit der Temperatur am Träger bzw. an der Heizvorrichtung ändert. Des Weiteren sind eine Ansteuereinrichtung und eine Auswerteeinrichtung für eine Temperaturerfassung an dem Träger vorgesehen. Die Ansteuereinrichtung ist dazu ausgebildet, ein Ansteuersignal mit Wechselstrom zu erzeugen, vorteilhaft auf an sich übliche Art und Weise. Die Auswerteeinrichtung ist dazu ausgebildet, eine Änderung des Ansteuersignals an der Sensorschicht zu erfassen, wobei diese Änderung abhängig von einer Temperatur bzw. der temperaturabhängigen elektrischen Leitfähigkeit der Sensorschicht ist. In einer Ausgestaltung der Erfindung können Ansteuereinrichtung und Auswerteeinrichtung gemeinsam vorgesehen sein, beispielsweise in einem Steuerbauteil wie einem Controller, Mikrocontroller odgl.. Dies muss aber nicht sein, sie können auch getrennt sein.

Erfindungsgemäß weist die Heizvorrichtung einen Transformator auf, der eine Primärseite und eine Sekundärseite aufweist. Die Primärseite ist dabei mit der Ansteuereinrichtung verbunden und auch mit der Auswerteeinrichtung. Die Sekundärseite weist einen ersten Anschluss und einen zweiten Anschluss auf. Diese Anschlüsse sind unterschiedlich mit dem Heizleiter, mit mindestens einer elektrisch leitfähigen Sensorelektrode oder mit dem Träger verbunden, wobei je einer der Anschlüsse mit einer der genannten Komponenten verbunden ist, die beiden Anschlüsse aber keinesfalls miteinander verbunden sind. Wenn einer der beiden Anschlüsse mit dem Träger verbunden ist, so muss er auch elektrisch leitfähig sein bzw. aus elektrisch leitfähigem Material bestehen oder zumindest beschichtet sein, beispielsweise aus Stahl bestehen. Wichtig ist, dass die beiden Anschlüsse beidseitig der Sensorschicht angeschlossen sind bzw. dass die Sensorschicht zwischen ihnen liegt, vorzugsweise genau zwischen ihnen, so dass die elektrisch leitfähigen Komponenten, mit denen die beiden Anschlüsse verbunden sind, direkt an die Sensorschicht anliegen und diese ggf. elektrisch kontaktieren können.

Die mindestens eine Sensorelektrode kann im Schichtaufbau am Träger vorgesehen sein, vorzugsweise flächig oder zumindest kammartig oder fingerartig, wie dies an sich aus dem Stand der Technik bekannt ist. Es ist auch möglich, beide Anschlüsse an jeweils eine von zwei unterschiedlichen Sensorelektroden anzuschließen, die zwischen sich in direktem Kontakt die Sensorschicht haben.

Somit wird mit der Erfindung aufgrund der Auswertung der Sensorschicht mittels des Transformators die Möglichkeit geschaffen, eine besonders gute elektrische Isolierung an der Heizvorrichtung vorzusehen. Dies ist für einen Schutz der Heizvorrichtung, insbesondere wenn damit Wasser als Medium erhitzt werden soll, von großem Vorteil. Außerdem können vorteilhafte Möglichkeiten für einen Schichtaufbau verwendet werden.

Es kann eine temperaturabhängige Dämpfung an der Sekundärseite des Transformators gemessen werden, die sich ergibt, wenn sich der Widerstand bzw. der komplexe elektrische Widerstand der Sensorschicht am Träger mit dessen Temperatur ändert. Der Transformator kann relativ einfach ausgebildet sein, da er nur sozusagen das zu messende Signal entkoppeln muss. Ein nennenswerter Ableitstrom fließt nicht durch die Schaltung, wodurch die elektrische Sicherheit stark verbessert ist. Des Weiteren kann eben der Schichtaufbau der Heizvorrichtung flexibler ausgestaltet werden. Eine Messung kann durch die Sensorschicht gegen den Träger oder gegen den Heizleiter erfolgen, möglicherweise auch gegen eine zuvor genannte zusätzlich vorzusehende Sensorelektrode.

Weitere Vorteile bestehen darin, dass für eine Basisisolierung, die auf dem Träger vorgesehen sein kann, und die Sensorschicht dasselbe Material verwendet werden kann. Zusätzlich kann erreicht werden, dass der Heizleiter relativ weit entfernt von dem Träger auf diesem angeordnet ist. Dabei können dazwischen die Sensorschicht, eine vorgenannte Basisisolierung und/oder eine Sensorelektrode darunter vorgesehen sein. Wenn auf den Heizleiter dann nur noch eine Abdeckung als Schicht zur elektrischen Isolierung aufgebracht werden muss, die bei erheblich niedrigeren Temperaturen eingebrannt werden kann als die sonstigen Schichten und insbesondere auch als der Heizleiter, ist es möglich, dass nach dem Einbrennen des Heizleiters kein weiterer Einbrennvorgang mit hoher Temperatur mehr notwendig ist. Dadurch ist es möglich, dass dessen Eigenschaften nach seinem eigenen Einbrennvorgang durch einen weiteren Einbrennvorgang nicht mehr oder nur noch minimal beeinträchtigt werden, wodurch er besonders genau abgestimmt sein kann.

Mit der erfindungsgemäßen Heizvorrichtung ist es möglich, dass an der Primärseite des Transformators das Ansteuersignal als Wechselsignal bzw. als Wechselstromsignal in die Sekundärseite induktiv eingekoppelt wird. Diese Sekundärseite ist über ihre beiden Anschlüsse verbunden derart, dass sich die Sensorschicht dazwischen befindet. In Abhängigkeit von der Temperatur an der Sensorschicht und somit auch am Träger ändert sich der Widerstand der Sensorschicht, der vorteilhaft ein sogenannter komplexer Widerstand ist. Diese temperaturabhängige Änderung bewirkt eine von der Temperatur abhängige Dämpfung der Sekundärseite des Transformators, was wiederum auf bekannte und leicht vorstellbare Art und Weise an der Primärseite des Transformators erfasst werden kann. An der damit verbundenen Auswerteeinrichtung kann dies als Maß für die Temperatur oder zumindest für eine zu hohe Temperatur erfasst werden mit einer einfachen Auswertung. Diese hohe Temperatur kann dann, wie aus dem eingangs genannten Stand der Technik bekannt, auch nur für einen kleinen Bereich am Träger bzw. an der Sensorschicht gelten. So ist eine im Vergleich zum eingangs genannten Stand der Technik leichtere Art einer Temperaturerfassung oder Temperaturüberwachung an einer solchen Heizvorrichtung möglich.

In weiterer Ausgestaltung der Erfindung kann vorgesehen sein, dass das Ansteuersignal eine Frequenz von weniger als 1 MHz aufweist. Vorteilhaft kann eine Frequenz zwischen 10 kHz und 200 kHz liegen. Besonders vorteilhaft kann sie zwischen 20 kHz bzw. 25 kHz und 80 kHz liegen, womit sie wesentlich oder vollständig über dem hörbaren Bereich von Menschen liegt. So können mögliche Geräusche vermieden werden.

Des Weiteren kann das Ansteuersignal eine relativ geringe Spannung aufweisen, die kleiner als 50 V sein kann. Vorteilhaft liegt sie zwischen 3 V und 20 V, besonders vorteilhaft bei 5 V. Somit kann eine üblicherweise für elektronische Schaltungen verwendete, leicht zur Verfügung stellbare Spannung verwendet werden.

Bei der Erfindung ist an der Primärseite ein Spannungsteiler ausgebildet mit einem Vorwiderstand vor der Primärseite des Transformators. An diesen Vorwiderstand ist die Ansteuereinrichtung angeschlossen, also über die Serienschaltung von Vorwiderstand und Primärseite. Die Auswerteeinrichtung wiederum ist zwischen Vorwiderstand und Primärseite angeschlossen, um die Spannung nur über der Primärseite des Transformators zu erfassen, um die vorgenannte temperaturabhängige Dämpfung zu erfassen.

In weiterer möglicher Ausgestaltung der Erfindung kann die Sensorschicht aus mehreren Teil-Sensorschichten bestehen, die aufeinander ausgebildet sind. Dabei sind sie direkt aufeinander aufgebracht und jeweils eingebrannt. Hierfür eignen sich vor allem Dickschichtverfahren. Die Teil-Sensorschichten weisen bevorzugt die gleiche Fläche auf und bedecken sich vollflächig oder zumindest zu mehr als 90%.

Wenn vorteilhaft die Sensorschicht bzw. die genannten Teil-Sensorschichten aufgebracht worden sind, bevor der Heizleiter aufgebracht ist, können sie auch davor eingebrannt werden. So ist eine dickere Sensorschicht möglich, insbesondere durch die Ausbildung aus mehreren aufeinanderliegenden Teil-Sensorschichten, und durch das mehrfach notwendige Einbrennen wird der erst danach aufzubringende Heizleiter nicht negativ beeinträchtigt.

Eine vorteilhafte Ausgestaltung der Erfindung sieht vor, dass auf einem Träger aus metallischem Material, vorteilhaft Stahl, direkt eine flächige Sensorschicht aus dem vorgenannten dielektrischen Material aufgebracht ist. Darauf kann möglicherweise eine Sensorelektrode aus elektrisch leitfähigem Material aufgebracht werden, welche in diesem Fall dann zur Messung durch die Sensorschicht gegen den Träger verwendet werden kann anstelle des Heizleiters. Oberhalb der flächigen Sensorschicht, also entweder direkt darauf oder auf die vorgenannte Sensorelektrode, wird eine Basis-Isolationsschicht aufgebracht. Diese sollte auch bei höheren Temperaturen und selbst 100°C bis 300°C oberhalb der maximalen Dauer-Betriebstemperatur der Heizvorrichtung noch ausreichend bzw. möglichst gut elektrisch isolierend sein. Auf dieser Basis-Isolationsschicht wird dann ein Heizleiter aufgebracht, der vorteilhaft mehrere längliche Abschnitte aufweisen kann, die miteinander verbunden sind. Für die Ausgestaltung des Heizleiters wird auf den eingangs genannten Stand der Technik verwiesen. Es können auch mehrere, elektrisch voneinander getrennte und somit einzeln bzw. beliebig ansteuerbare Heizleiter an der Heizvorrichtung vorgesehen sein. Auf dem Heizleiter wiederum ist eine flächige elektrisch isolierende Abdeckschicht aufgebracht, die sozusagen den Schichtaufbau nach oben abschließt. Diese Abdeckschicht sollte ähnlich wie die vorgenannte Basis-Isolationsschicht auch bei Temperaturen oberhalb der Nenn-Betriebstemperatur der Heizvorrichtung elektrisch isolierend sein als Berührschutz und dergleichen.

Anstelle der Auswerteeinrichtung, die ein Signal als Maß für die erfasste Temperatur oder ein Überschreiten einer bestimmten Temperatur abgibt oder erzeugt, kann auch eine diskrete Elektronik an der Primärseite des Transformators angeschlossen sein. Dies kann besonders vorteilhaft in einfacher Ausgestaltung ein Relais sein, das bei zu starker oder zu schwacher Dämpfung, was einer zu hohen Temperatur an der Heizvorrichtung entspricht, die Heizvorrichtung zumindest teilweise abschaltet, um wieder eine Verringerung der Temperatur zu bewirken. Dafür können, wie eingangs erläutert worden ist, getrennt ansteuerbare Heizleiter von Vorteil sein, von denen einige abgeschaltet werden für eine Reduzierung der Temperatur.

Die Erfindung basiert unter anderem darauf, dass mit zunehmender Temperatur der Sensorschicht deren elektrische Leitfähigkeit ansteigt. Damit kann ein ansteigender Strom von der Sekundärseite des Transformators durch die Sensorschicht an den Heizleiter, an den Träger oder an die möglicherweise vorgesehene Sensorelektrode abfließen. Dadurch wird mehr Energie von dem Transformator übertragen, wodurch die Dämpfung auf der Primärseite ansteigt. Dies kann eben, wie zuvor erläutert worden ist, sehr einfach von der Auswerteeinrichtung erfasst werden, alternativ von der diskreten Elektronik. Ist diese in einfacher Ausgestaltung ein vorgenanntes Relais, kann ab einem bestimmten Punkt das Relais direkt geschaltet werden. Dadurch kann die Heizleistung der Heizvorrichtung reduziert werden oder abgeschaltet werden, um eine gefährlich hohe Temperatur an der Heizvorrichtung zu verringern.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränken die unter diesen gemachten Aussagen nicht in ihrer Allgemeingültigkeit.

### Kurzbeschreibung der Zeichnungen

Ausführungsbeispiele der Erfindung sind in den Zeichnungen dargestellt und werden im Folgenden näher erläutert. In den Zeichnungen zeigen:
- Fig. 1: ein Schaltbild einer erfindungsgemäßen Heizvorrichtung mit Ansteuerung über einen Transformator zur Temperaturüberwachung,
- Fig. 2: ein Prinzipschaltbild zur Darstellung eines komplexen Widerstandes einer Sensorschicht auf einem Träger der Heizvorrichtung,
- Fig. 3: ein Schichtaufbau auf dem Träger der Heizvorrichtung aus Fig. 1 und
- Fig. 4: eine Draufsicht auf eine weitere Ausgestaltung einer Heizvorrichtung ähnlich derjenigen aus Fig. 1 und mit dem Schichtaufbau aus Fig. 3 und zwei verschränkt ineinander verlaufenden Heizleitern.

### Detaillierte Beschreibung der Ausführungsbeispiele

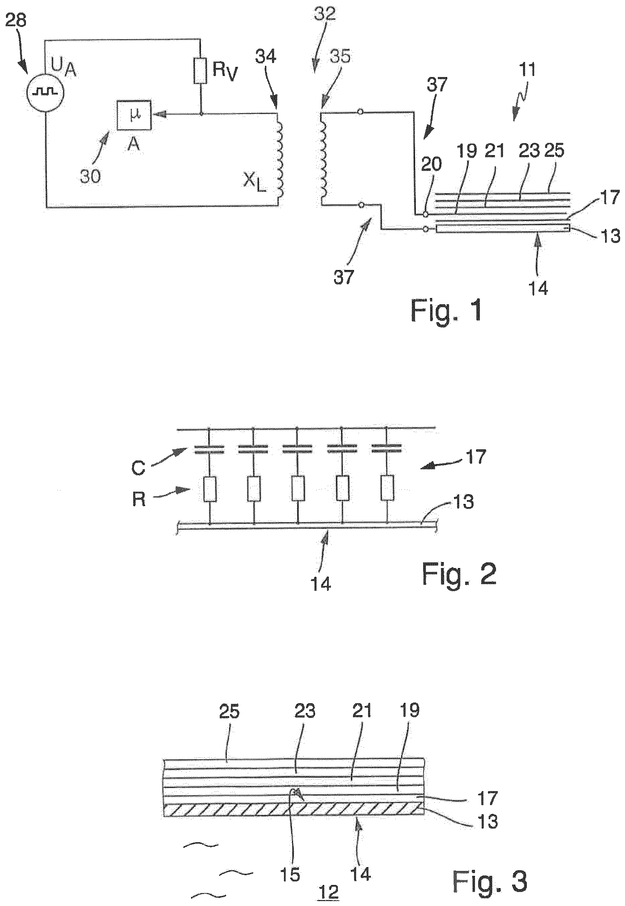

In der Fig. 1 ist eine erfindungsgemäße Heizvorrichtung 11 dargestellt. Im rechten Bereich ist der eigentliche aktive Teil der Heizvorrichtung 11 gezeigt mit einem Träger 13 und einem Schichtaufbau darauf. Im linken Bereich ist ein vorbeschriebener Transformator 32 mit Ansteuereinrichtung 28 und Auswerteeinrichtung 30 dargestellt.

An eine Primärseite 34 des Transformators 32 ist in Reihe ein Vorwiderstand R_{V} geschaltet. Dazwischen ist ein Anschluss an eine Auswerteeinrichtung 30 vorgesehen, vorteilhaft ein Controller bzw. Mikrocontroller. Über der Reihenschaltung aus Vorwiderstand R_{V} und Primärseite 34 liegt eine Ansteuerspannung U_{A} der Ansteuereinrichtung 28 an. Die Ansteuerspannung U_{A} kann ein Wechselsignal sein mit Rechteckform. Die Spannung kann etwa 5 V betragen, eine Messfrequenz kann ganz allgemein zwischen 1 kHz und 10 MHz liegen, vorteilhaft im geringen Kilohertz-Bereich, beispielsweise bei 50 kHz. Mit einer derart geringen Spannung entsprechend einer Signalkleinspannung ist eine Berührsicherheit relativ problemlos.

Für die Primärseite ist der komplexe Widerstand X_{L} dargestellt, der von der Sekundärseite 35 sozusagen übertragen wird. Der komplexe Widerstand X_{L} kommt durch die Eigenschaften einer Sensorschicht 17, die die eingangs genannten dielektrischen Eigenschaften aufweist mit einem elektrischen Widerstand, der temperaturabhängig ist. Bezüglich weiterer Details zu einer derartigen Sensorschicht 17 wird auf den vorgenannten Stand der Technik verwiesen. Die Sensorschicht 17 ist auf eine Oberseite 15 eines metallischen Trägers 13 aufgebracht. An einer Unterseite 14 des Trägers 13 befindet sich ein zu erhitzendes Medium, gemäß Fig. 3 kann dies vorteilhaft Wasser 12 sein. Für den im Folgenden beschriebenen Schichtaufbau wird auch auf die vergrößerte Darstellung der Fig. 3 verwiesen, die dies anschaulicher zeigt.

Auf der Sensorschicht 17 befindet sich eine Sensorelektrode 19. Diese kann zwar flächig ausgebildet sein, kann aber auch kammartig oder mit länglichen Fingern ausgebildet sein, abhängig davon was als vorteilhaft angesehen wird. Die Sensorelektrode 19 kann einen eigenen Kontakt 20 aufweisen, der an die Sekundärseite 35 des Transformators 32 angeschlossen ist. Der andere Anschluss der Sekundärseite 35 geht hier direkt an den Träger 13.

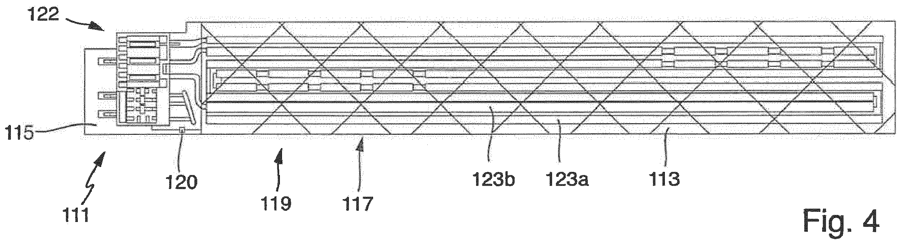

Auf der Sensorelektrode 19 ist eine Basisisolation 21 aufgebracht. Die Basisisolation 21 sorgt dafür, dass eine sichere elektrische Isolierung hin zu dem metallischen Träger 13 gegeben ist. Auf dieser Basisisolation 21 wird ein Heizleiter 23 aufgebracht. Zu dessen Ausgestaltung wird auf den eingangs genannten Stand der Technik verwiesen, des Weiteren aber auch auf die Fig. 4. Es ist wichtig, dass der Heizleiter 23 gegenüber dem Träger 13 auf alle Fälle elektrische isoliert ist, unabhängig von einer Temperatur bzw. einer temperaturabhängigen Leitfähigkeit der Sensorschicht 17. Insofern kann die Basis-Isolation 21 sehr dick ausgebildet sein. Sie kann auch aus mehreren Schichten aufgebaut sein um die gewünschten Eigenschaften zu erhalten.

Auf die Basis-Isolation 21 wird dann der Heizleiter 23 in gewünschter Form aufgebracht, vorteilhaft in einem Dickschicht-Verfahren und mit grundsätzlich beliebiger Form, wie sie aus dem Stand der Technik bekannt ist. Auch hier kann ein mehrschichtiger Aufbau erfolgen.

Nach dem Aufbringen des Heizleiters 23 folgt noch eine Abdeckschicht 25. Diese sorgt für eine elektrische Isolierung nach oben bzw. nach außen. Damit durch ein Aufbringen und vor allem Einbrennen der Abdeckschicht 25 der Heizleiter 23 nicht mehr wesentlich beeinträchtigt wird, wie eingangs erläutert worden ist, sollte hierfür eine geringere Einbrenntemperatur vorgesehen werden. Somit liegt ein wesentlicher Vorteil der Erfindung bzgl. des Schichtaufbaus der Heizvorrichtung 11 auf dem Träger 13 darin, dass der Heizleiter 23 erst relativ spät aufgebracht werden muss und vor allem erst nach den Schichten, die üblicherweise eine hohe Einbrenntemperatur benötigen.

Die Fig. 2 zeigt den komplexen Widerstand der Sensorschicht 17 bestehend aus parallel geschalteten Serienschaltungen einer Kapazität C und eines ohmschen Widerstands R. Diese Parallelschaltung liegt zwischen der Sekundärseite 35 bzw. der Zuleitung 37 zwischen Transformator 32 und Träger 13 und dem Träger 13 selbst an. Die Zuleitung 37 kann eine übliche Leitung sein und relativ lang sein. Somit muss der linke Teil mit der Ansteuerung, Auswertung und vor allem dem Transformator 32 nicht so nahe an dem Träger 13 selbst sein. Zumindest der ohmsche Widerstand R weist dabei eine Temperaturabhängigkeit seines Widerstandswerts auf, die bekanntermaßen für die Temperaturerfassung bzw. zumindest Temperaturüberwachung benutzt wird.

Aus den Fig. 1 und 3 ist leicht ersichtlich, dass die Sekundärseite 35 des Transformators 32 nicht nur an die Sensorelektrode 19 und an den Träger angeschlossen werden muss oder kann, sondern auch beispielsweise an den Heizleiter 23 anstelle an die Sensorelektrode 19. Dann wird die Sensorelektrode 19 gar nicht mehr benötigt. Problematisch wäre dann aber die Basis-Isolation 21, da durch diese eigentlich kein Strom hindurchfließen soll, noch nicht einmal ein geringfügiger Leckstrom.

In der Fig. 4 ist in der Draufsicht die Heizvorrichtung 111 dargestellt, die entweder flach sein kann oder ein Rohr, so dass die Fig. 3 in diesem Fall den abgewickelten Träger zeigt. Auf den Träger 113 sind zwei Heizleiter 123 aufgebracht, nämlich ein erster Heizleiter 123a und ein zweiter Heizleiter 123b. Der erste Heizleiter 123a bildet einen Teil-Heizkreis und der zweite Heizleiter 123b bildet einen Teil-Heizkreis. Beide Heizleiter 123a und 123b sind ineinander verschränkt bzw. verlaufen mäanderförmig ineinander, so dass sie letztlich dieselbe Fläche des Trägers 113 beheizen, wenn sie einzeln betrieben werden, im gemeinsamen Betrieb ohnehin. Damit ist sozusagen eine unterschiedliche Aufteilung der Heizleistung der Heizvorrichtung 111 in sich möglich. Bei maximaler gewünschter Heizleistung werden beide Heizleiter 123a und 123b parallel betrieben. Bei minimaler gewünschter Heizleistung werden sie seriell geschaltet betrieben. Bei einer dazwischen liegenden gewünschten Heizleistung wird einer der Heizleiter 123a oder 123b betrieben. Weisen sie unterschiedliche Leistungswerte auf, so kann durch jeweiligen einzelnen Betrieb die entsprechende Leistung erzeugt werden.

Beide Heizleiter 123a und 123b weisen die gleiche Länge und jeweils vier Längsabschnitte auf. Sie weisen auch an zwei nebeneinanderliegenden Längsabschnitten auf bekannte Art und Weise Unterbrechungen durch Kontaktbrücken auf. Damit kann lokal die Heizleistung etwas gesenkt werden. Eine elektrische Kontaktierung der Heizleiter 123a und 123b erfolgt über Kontaktfelder. Über einen Sensorklontakt 120 kann eine Sensorelektrode 119 angeschlossen werden. Schematisch zu erkennen ist auch ein Steckanschluss 122, der auf den Kontaktfeldern bzw. auf den Träger 113 aufgebracht ist, vorteilhaft gemäß der vorgenannten EP 3145273 A1.

Der Schichtaufbau bei der Heizvorrichtung 111 gemäß Fig. 4 sollte demjenigen aus Fig. 3 entsprechen. Die Sensorelektrode 119 kann dabei einerseits flächig ausgebildet sein, um sozusagen zusammen mit dem anderen elektrischen Kontakt des Trägers 113 eine auf die ganze Fläche gemittelte bzw. integrierte Temperaturerfassung bzw. Temperaturüberwachung vorzusehen. Alternativ können auch mehrere getrennte Sensorelektroden 119 vorgesehen sein, die dann jeweils in ihrem Bereich eine separate und getrennte Temperaturerfassung ermöglichen. Des Weiteren könnte bei der Heizvorrichtung 111 gemäß Fig. 4 auch vorgesehen sein, dass die beiden Heizleiter 123a und 123b nicht derart verschränkt verlaufen, sondern jeder in sozusagen in einem eigenen Bereich oder einer eigenen Hälfte des Träger 113. Dann könnte für jeden dieser Bereich bzw. dieser Heizleiter eine jeweils von der Fläche angepasste Sensorelektrode 119 vorgesehen sein, mit der dann für jeden der Heizleiter getrennt eine Temperaturerfassung möglich ist. Dies ist dem Fachmann grundsätzlich aber aus dem Stand der Technik bekannt. Sind mehrere Sensorelektroden vorgesehen für mehrere getrennte Temperaturerfassungen, so ist pro Sensorelektrode bzw. pro Temperaturerfassung ein eigener Transformator notwendig.

Die veränderliche Dämpfung an der Sekundärseite, die von der Temperatur abhängt, ergibt sich eben aus der temperaturabhängigen Änderung des komplexen Widerstandes der Sensorschicht 17 entsprechend Fig. 2. Diese veränderliche Dämpfung bewirkt im Transformator 32 einen veränderlichen Spannungsabfall im Spannungsteiler aus Vorwiderstand R_{V} und Primärwicklung 34. Dieser veränderliche Spannungsabfall wiederum kann durch die Auswerteeinrichtung 30 bzw. durch einen entsprechenden Microcontroller ausgewertet werden. Alternativ dazu kann mit dem Spannungsabfall eine diskrete Elektronik angesteuert werden, die beispielsweise einen elektromechanischen Schalter wie ein Relais direkt schaltet. Damit kann die Heizleistung geschaltet bzw. beeinflusst werden, was für den Fachmann leicht vorstellbar ist.

## Patentansprüche

1. Heizvorrichtung (11, 111) mit:
- einem Träger (13, 113), der an einer Oberseite (15) elektrisch isolierend ist und an seiner Unterseite (14) ein angrenzendes Medium (12) beheizt,
- einem Heizleiter (23, 123a, 123b) auf dem Träger (13, 113),
- einer Sensorschicht (17, 117) aus dielektrischem Material auf dem Träger (13, 113), wobei die Sensorschicht
- über oder unter dem Heizleiter angeordnet ist und elektrisch gegen den Heizleiter isoliert ist,
- eine temperaturabhängige elektrische Leitfähigkeit aufweist und sich ein elektrischer Widerstand der Sensorschicht in Abhängigkeit von der Temperatur an der Sensorschicht ändert,
- einer Ansteuereinrichtung (28) und einer Auswerteeinrichtung (30) für eine Temperaturerfassung an dem Träger (13, 113),
wobei die Auswerteeinrichtung (30) dazu ausgebildet ist, eine Änderung eines Ansteuersignals (U_{A}) an der Sensorschicht (17, 117) abhängig von einer Temperatur und/oder der temperaturabhängigen elektrischen Leitfähigkeit der Sensorschicht zu erfassen,
**dadurch gekennzeichnet, dass**
- die Ansteuereinrichtung (28) dazu ausgebildet ist, das Ansteuersignal (U_{A}) mit Wechselstrom zu erzeugen,
- die Heizvorrichtung (11, 111) einen Transformator (32) mit einer Primärseite (34) und einer Sekundärseite (35) aufweist,
- die Primärseite (34) mit der Ansteuereinrichtung (28) verbunden ist und mit der Auswerteeinrichtung (30) verbunden ist,
- die Sekundärseite (35) einen ersten Anschluss und einen zweiten Anschluss aufweist,
- der erste Anschluss und der zweite Anschluss unterschiedlich mit dem Heizleiter (23, 123a, 123b), mit einer elektrisch leitfähigen Sensorelektrode (19, 119) oder mit dem Träger (13, 113) verbunden sind,
- der Träger elektrisch leitfähig ist in dem Fall, dass einer der beiden Anschlüsse mit ihm verbunden ist,
- die beiden Anschlüsse beidseitig der Sensorschicht (17, 117) angeschlossen sind,
- an der Primärseite (34) ein Spannungsteiler von Vorwiderstand (R_{V}) und Primärseite (34) an das Ansteuersignal (U_{A}) angeschlossen ist,
- zwischen Vorwiderstand (R_{V}) und Primärseite (34) die Auswerteeinrichtung (30) angeschlossen ist.

2. Heizvorrichtung nach Anspruch 1, **dadurch gekennzeichnet, dass** der Träger (13, 113) elektrisch leitfähig ist, vorzugsweise aus Metall besteht, wobei der Träger eine Basisisolierung oder eine elektrisch isolierende Sensorschicht (17, 117) auf seiner Oberfläche (15) aufweist, und wobei diese Oberfläche elektrisch leitfähig ist.

3. Heizvorrichtung nach Anspruch 1 oder 2, **dadurch gekennzeichnet, dass** das Ansteuersignal (U_{A}) eine Frequenz zwischen 10 kHz und 200 kHz aufweist.

4. Heizvorrichtung nach Anspruch 3, **dadurch gekennzeichnet, dass** das Ansteuersignal (U_{A}) eine Frequenz zwischen 20 kHz und 80 kHz aufweist.

5. Heizvorrichtung nach einem der vorhergehenden Ansprüche, **dadurch gekennzeichnet, dass** das Ansteuersignal (U_{A}) eine Spannung zwischen 3 V und 20 V aufweist, vorzugsweise 5 V.

6. Heizvorrichtung nach einem der vorhergehenden Ansprüche, **dadurch gekennzeichnet, dass** die Sensorschicht (17, 117) aus mehreren Teil-Sensorschichten aufeinander ausgebildet ist.

7. Heizvorrichtung nach Anspruch 6, **dadurch gekennzeichnet, dass** die mehreren Teil-Sensorschichten in einem Dickschichtverfahren aufgebracht sind, wobei insbesondere nach dem Aufbringen jeder Teil-Sensorschicht ein Einbrennvorgang vorgenommen worden ist.

8. Heizvorrichtung nach einem der vorhergehenden Ansprüche, **dadurch gekennzeichnet, dass** der Träger (13, 113) ein metallischer Träger ist, auf den direkt eine flächige Sensorschicht (17, 117) aus dem dielektrischen Material aufgebracht ist, und auf die flächige Sensorschicht eine Sensorelektrode (19, 119) aus elektrisch leitfähigem Material aufgebracht ist, und auf die Sensorelektrode eine Basis-Isolationsschicht (21) aufgebracht ist, und auf die Basis-Isolationsschicht ein Heizleiter (23, 123a, 123b) aufgebracht ist, und auf den Heizleiter eine flächige elektrisch isolierende Abdeckschicht (25) aufgebracht ist.

9. Heizvorrichtung nach Anspruch 8, **dadurch gekennzeichnet, dass** der Heizleiter (123a, 123b) mehrere länglichen Abschnitte aufweist, die miteinander verbunden sind.

10. Verfahren zur Temperaturerfassung an einer Heizvorrichtung (11, 111) nach einem der vorhergehenden Ansprüche, **dadurch gekennzeichnet, dass**:
- an der Primärseite (34) des Transformators (32) das Ansteuersignal (U_{A}) mit Wechselstrom in die Sekundärseite (35) eingekoppelt wird, die mit den beiden Anschlüssen beidseitig der Sensorschicht (17, 117) angeschlossen ist,
- sich in Abhängigkeit von der Temperatur an der Sensorschicht (17, 117) der komplexe Widerstand der Sensorschicht ändert,
- diese temperaturabhängige Änderung eine temperaturabhängige Dämpfung der Sekundärseite (35) des Transformators (32) bewirkt, die an der Primärseite (34) erfasst wird und von der Auswerteeinrichtung (30) als Maß für die Temperatur erfasst wird,
- an der Primärseite (34) ein Spannungsteiler von Vorwiderstand (R_{V}) und Primärseite (34) an das Ansteuersignal angeschlossen ist,
- zwischen Vorwiderstand (R_{V}) und Primärseite (34) die Auswerteeinrichtung (30) angeschlossen ist,
- die temperaturabhängige Dämpfung auf der Primärseite (34) einen veränderlichen Spannungsabfall im Spannungsteiler bewirkt, der direkt durch die Auswerteeinrichtung (30) ausgewertet wird oder der eine diskrete Elektronik ansteuert.

11. Verfahren nach Anspruch 10, **dadurch gekennzeichnet, dass** mit zunehmender Temperatur der Sensorschicht (17, 117) deren elektrische Leitfähigkeit ansteigt und ein ansteigender Strom von der Sekundärseite (35) des Transformators (32) durch die Sensorschicht (17, 117) an den Heizleiter (23, 123a, 123b), an den Träger (13, 113) oder an die Sensorelektrode (19, 119) abfließt, wodurch mehr Energie von dem Transformator (32) an die Heizvorrichtung (11, 111) übertragen wird und dadurch die Dämpfung auf der Primärseite (34) ansteigt, was von der Auswerteeinrichtung (30) erfasst wird als Maß für die Temperatur.

## Claims

1. Heating device (11, 111) having:
- a carrier (13, 113) which is electrically insulating on an upper side (15) and heats an adjoining medium (12) on an underside (14),
- a heating conductor (23, 123a, 123b) on the carrier (13, 113),
- a sensor layer (17, 117) of dielectric material on the carrier (13, 113), wherein the sensor layer
- is arranged above or below the heating conductor and is electrically insulated against the heating conductor,
- has a temperature-dependent electrical conductivity, and an electrical resistance of the sensor layer changes depending on the temperature at the sensor layer,
- a control device (28) and an evaluation device (30) to register the temperature at the carrier (13, 113),
wherein the evaluation device (30) is designed to register any change in a control signal (U_{A}) at the sensor layer (17, 117) depending on a temperature and/or on the temperature-dependent electrical conductivity of the sensor layer,
**characterized in that**
- the control device (28) is designed to generate the control signal (U_{A}) with alternating current,
- the heating device (11, 111) has a transformer (32) with a primary side (34) and a secondary side (35),
- the primary side (34) is connected to the control device (28) and to the evaluation device (30),
- the secondary side (35) has a first connection and a second connection,
- the first connection and the second connection are connected in different manner to the heating conductor (23, 123a, 123b), to an electrically conductive sensor electrode (19, 119) or to the carrier (13, 113),
- the carrier is electrically conductive in the event that one of the two connections is connected to it,
- the two connections are connected on both sides of the sensor layer (17, 117),
- on the primary side (34), a voltage divider of series resistor (Rᵥ) and primary side (34) is connected to the control signal (U_{A}),
- the evaluation device (30) is connected between the series resistor (Rᵥ) and the primary side (34).

2. Heating device according to claim 1, **characterized in that** the carrier (13, 113) is electrically conductive and preferably consists of metal, wherein the carrier has a basic insulation or an electrically insulating sensor layer (17, 117) on its surface (15), and wherein this surface is electrically conductive.

3. Heating device according to claim 1 or 2, **characterized in that** the control signal (U_{A}) has a frequency of between 10 kHz and 200 kHz.

4. Heating device according to claim 3, **characterized in that** the control signal (U_{A}) has a frequency of between 20 kHz and 80 kHz.

5. Heating device according to any of the preceding claims, **characterized in that** the control signal (U_{A}) has a voltage of between 3 V and 20 V, preferably 5 V.

6. Heating device according to any of the preceding claims, **characterized in that** the sensor layer (17, 117) is formed from a plurality of sensor sub-layers on top of one another.

7. Heating device according to claim 6, **characterized in that** the plurality of sensor sub-layers are deposited in a thick-film process, wherein in particular a stoving process is performed after the deposition of each sensor sub-layer.

8. Heating device according to any of the preceding claims, **characterized in that** the carrier (13, 113) is a metallic carrier onto which a planar sensor layer (17, 117) of the dielectric material is directly deposited; a sensor electrode (19, 119) of electrically conductive material is deposited onto the planar sensor layer; a basic insulation layer (21) is deposited onto the sensor electrode; a heating conductor (23, 123a, 123b) is deposited onto the basic insulation layer; and a planar electrically insulating cover layer (25) is deposited onto the heating conductor.

9. Heating device according to claim 8, **characterized in that** the heating conductor (123a, 123b) has a plurality of elongated sections that are connected to one another.

10. Method for registering the temperature at a heating device (11, 111) according to any of the preceding claims, **characterized in that**:
- on the primary side (34) of the transformer (32), the control signal (U_{A}) is coupled with alternating current into the secondary side (35), which is connected to the two connections on both sides of the sensor layer (17, 117),
- the complex resistance of the sensor layer changes depending on the temperature at the sensor layer (17, 117),
- this temperature-dependent change effects a temperature-dependent damping of the secondary side (35) of the transformer (32), which is registered on the primary side (34) and is registered by the evaluation device (30) as a measure for the temperature,
- on the primary side (34), a voltage divider of series resistor (Rᵥ) and primary side (34) is connected to the control signal,
- the evaluation device (30) is connected between the series resistor (Rᵥ) and the primary side (34),
- the temperature-dependent damping on the primary side (34) effects a variable voltage drop in the voltage divider which is directly evaluated by the evaluation device (30) or which actuates a discrete electronic unit.

11. Method according to claim 10, **characterized in that** as the temperature of the sensor layer (17, 117) increases its electrical conductivity rises and a rising current flows from the secondary side (35) of the transformer (32) through the sensor layer (17, 117) to the heating conductor (23, 123a, 123b), to the carrier (13, 113) or to the sensor electrode (19, 119), whereby more energy is transmitted from the transformer (32) to the heating device (11, 111) and the damping on the primary side (34) increases as a result, which is registered by the evaluation device (30) as a measure for the temperature.

## Revendications

1. Dispositif de chauffage (11, 111) avec :
- un support (13, 113) qui est électriquement isolant sur une face supérieure (15) et qui, sur sa face inférieure (14), chauffe un fluide (12) avoisinant,
- un conducteur chauffant (23, 123a, 123b) sur le support (13, 113),
- une couche de détection (17, 117) constituée d'un matériau diélectrique sur le support (13, 113), sachant que la couche de détection
- est disposée au-dessus ou en dessous du conducteur chauffant et est isolée électriquement du conducteur chauffant,
- présente une conductibilité électrique thermosensible et qu'une résistance électrique de la couche de détection change en fonction de la température sur la couche de détection,
- un dispositif de commande (28) et un dispositif d'évaluation (30) pour une acquisition de température sur le support (13, 113),
sachant que le dispositif d'évaluation (30) est conçu pour acquérir une modification d'un signal de commande (UA) sur la couche de détection (17, 117) en fonction d'une température et/ou de la conductibilité électrique thermosensible de la couche de détection,
**caractérisé en ce que**
- le dispositif de commande (28) est conçu pour produire le signal de commande (U_{A}) avec courant alternatif,
- le dispositif de chauffage (11, 111) présente un transformateur (32) avec un côté primaire (34) et un côté secondaire (35),
- le côté primaire (34) est relié au dispositif de commande (28) et au dispositif d'évaluation (30),
- le côté secondaire (35) présente un premier raccord et un second raccord,
- le premier raccord et le second raccord sont reliés de manière différente au conducteur chauffant (23, 123a, 123b), à une électrode de détection électroconductrice (19, 119) ou au support (13, 113),
- le support est électroconducteur dans le cas où un des deux raccords est relié à celui-ci,
- les deux raccords sont raccordés des deux côtés de la couche de détection (17, 117),
- sur le côté primaire (34), un diviseur de tension de résistance en série (Rᵥ) et côté primaire (34) est relié au signal de commande (U_{A}),
- le dispositif d'évaluation (30) est raccordé entre la résistance en série (Rᵥ) et le côté primaire.

2. Dispositif de chauffage selon la revendication 1, **caractérisé en ce que** le support (13, 113) est électroconducteur, est constitué de préférence de métal, sachant que le support présente une isolation de base ou une couche de détection (17, 117) électriquement isolante sur sa surface (15), et sachant que cette surface est électroconductrice.

3. Dispositif de chauffage selon la revendication 1 ou 2, **caractérisé en ce que** le signal de commande (U_{A}) présente une fréquence comprise entre 10 kHz et 200 kHz.

4. Dispositif de chauffage selon la revendication 3, **caractérisé en ce que** le signal de commande (U_{A}) présente une fréquence comprise entre 20 kHz et 80 kHz.

5. Dispositif de chauffage selon l'une des revendications précédentes, **caractérisé en ce que** le signal de commande (U_{A}) présente une tension comprise entre 3 V et 20 V, de préférence 5 V.

6. Dispositif de chauffage selon l'une des revendications précédentes, **caractérisé en ce que** la couche de détection (17, 117) est constituée de plusieurs couches de détection partielles superposées.

7. Dispositif de chauffage selon la revendication 6, **caractérisé en ce que** les multiples couches de détection partielles sont appliquées selon un procédé à couches épaisses, sachant qu'après l'application de chaque couche de détection partielle, un procédé de cuisson a été réalisé.

8. Dispositif de chauffage selon l'une des revendications précédentes, **caractérisé en ce que** le support (13, 113) est un support métallique sur lequel est appliquée directement une couche de détection (17, 117) plane constituée du matériau diélectrique, et qu'une électrode de détection (19, 119) constituée d'un matériau électroconducteur est appliquée sur la couche de détection plane, et qu'une couche isolante de base (21) est appliquée sur l'électrode de détection, et qu'un conducteur chauffant (23, 123a, 123b) est appliqué sur la couche isolante de base, et qu'une couche de recouvrement (25) électriquement isolante et plane est appliquée sur le conducteur chauffant.

9. Dispositif de chauffage selon la revendication 8, **caractérisé en ce que** le conducteur chauffant (123a, 123b) présente plusieurs sections oblongues reliées les unes aux autres.

10. Procédé d'acquisition de température sur un dispositif de chauffage (11, 111) selon l'une des revendications précédentes, **caractérisé en ce :**
- **que** sur le côté primaire (34) du transformateur (32), le signal de commande (U_{A}) est couplé avec courant alternatif au côté secondaire (35) qui est relié aux deux raccords des deux côtés de la couche de détection (17, 117),
- **que** la résistance complexe de la couche de détection change en fonction de la température sur la couche de détection (17, 117),
- ce changement en fonction de la température provoque une atténuation en fonction de la température, du côté secondaire (35) du transformateur (32) qui est acquise sur le côté primaire (34) et qui est acquise par le dispositif d'évaluation (30) comme mesure pour la température,
- sur le côté primaire (34), un diviseur de tension de résistance en série (Rᵥ) et le côté primaire (34) est relié au signal de commande,
- le dispositif d'évaluation (30) est raccordé entre la résistance en série (Rᵥ) et le côté primaire,
- l'atténuation en fonction de la température sur le côté primaire (34) provoque une chute de tension variable dans le diviseur de tension, laquelle chute est évaluée directement par le dispositif d'évaluation (30) ou commande un dispositif électronique discret.

11. Procédé selon la revendication 10, **caractérisé en ce qu'**avec la température croissante de la couche de détection (17, 117), sa conductibilité électrique augmente et qu'un courant croissant circule du côté secondaire (35) du transformateur (32) à travers la couche de détection (17, 117) vers le conducteur chauffant (23, 123a, 123b), le support (13, 113) ou l'électrode de détection (19, 119), ce qui fait que plus d'énergie est transmise du transformateur (32) au dispositif de chauffage (11, 111) et qu'ainsi, l'atténuation augmente sur le côté primaire (34), ce qui est acquis par le dispositif d'évaluation (30) comme mesure pour la température.
